# EUROPEAN PATENT APPLICATION

(11) **EP 1 621 410 A2**
(43) Date of publication of application: **01.02.2006**
(21) Application number: 05254689.2
(22) Date of filing: 27.07.2005
(51) Int. Cl.: B60R 16/02

(54) **Electrical power unit and power distribution center therefor for vehicles**

(30) Priority: 27.07.2004 US 899933
(71) Applicant: PACCAR INC., Bellevue, WA 98804 (US)
(72) Inventor: Plummer, Lew, Mount Vernon,WA 98273 (US)
(74) Representative: Tranter, Andrew David

(57) **Abstract**

A power unit 20 comprises a power source 22 and a load distribution center 24 mounted to the power source 22. In one embodiment, the load distribution center includes a base 32 that is removably mounted to the power source, a primary positive terminal bus member 34 connected to the positive terminal of the power source, a secondary positive terminal bus member 36 connected to the primary positive terminal bus member through a switching device, and a negative terminal bus member 38 that is connected to the negative terminal of the power source. The primary bus member and/or the secondary bus member includes connectors for connecting leads of electrical devices to the primary and/or secondary bus members, respectively.

## Description

### FIELD OF THE INVENTION

The present invention relates generally to electrical power units, and more particularly, to electrical power units for vehicles, such as class 8 trucks.

### BACKGROUND OF THE INVENTION

Conventional Class 8 trucks typically include a chassis to which wheels are rotatably connected. Mounted on the chassis is a cabin from which an operator may drive the vehicle. For this purpose, the cabin includes various controls, such as a steering wheel, and monitoring devices, such as gauges. The vehicle further includes a propulsion generation unit, such as an engine, and a battery or power supply for supplying power to start the engine and to power other electrical devices of the vehicle, such as lights, a radio, electrical receptacles, to name a few, when the engine is not running. In these vehicles, the battery is typically a gas venting lead acid battery that is connected to such components through a power distribution center (e.g., fuse block). The power distribution center is generally located in an area remote from the battery due to the gas venting nature of the batteries used and is interconnected with the electrical devices by a plurality of electrical cabling.

Thus, the electrical circuit typically employed in such vehicles begins at the positive terminal of the battery and connects to the distribution center via electrical cable. Electrical cabling then extends from the distribution center to the electrical devices requiring power. The electrical devices and the negative terminal of the battery are connected to a common ground, thus completing the circuit.

While such an electrical circuit is adequate for supplying electrical power to the electrical devices of the vehicle, it is not without its deficiencies. Particularly, the length of the cables required and the multiplicity of connections required to supply power from the battery to the electrical devices reduce the electrical current available for such critical vehicle operations as starting the engine.

### SUMMARY OF THE INVENTION

In accordance with aspects of the present invention an electrical power unit for supplying power to at least one electrical device having an electrical lead is provided. The power unit includes an electrical power source having at least one negative and positive terminal and a first conductive member removably secured to or supported by the power source. The first conductive member is connected in electrical communication to the positive terminal of the power source and includes at least one connector for electrically connecting the lead of the electrical device to the first conductive member. The power unit further includes a second conductive member connected in electrical communication to the negative terminal of the power source.

In accordance with another aspect of the present invention, an electrical power unit is provided. The unit includes an electrical power source having at least one negative and positive terminal and a load distribution device removably mounted to the power source. The load distribution device includes a primary bus connected in electrical communication to the positive terminal of the power source, a secondary bus positioned a spaced distance from the primary bus member, and a negative bus connected in an electrical communication to the negative terminal of the power source. The unit further includes a switching device selectively interconnecting the primary and secondary buses in electrical communication. The switching device has a closed state, wherein the switching device couples the primary bus and the secondary bus in electrical communication, and a open state, wherein the switching device decouples the electrical connection of the primary bus from the secondary bus.

In accordance with another aspect of the present invention, a power unit located in a vehicle having a propulsion generation unit and a plurality of electrical vehicle accessories is provided. The power unit includes at least one power source having negative and positive terminals and a power load distribution device for interconnecting the positive terminal of the power source and plurality of electrical vehicle accessories. The power load distribution device includes a primary bus member connected in electrical communication to the positive terminal of the power source, a negative bus member connected in electrical communication to the negative terminal of the power source, and a secondary bus member. The power unit further includes a switching device selectively interconnecting the secondary bus member and the primary bus member in electrical communication. The switching device has an open state, wherein the primary and secondary bus members are isolated from one another, and a closed state, wherein the supply of power from the power source may flow between the primary and secondary bus members.

### BRIEF DESCRIPTION OF THE DRAWINGS

The foregoing aspects and many of the attendant advantages of this invention will become more readily appreciated by reference to the following detailed description, when taken in conjunction with the accompanying drawings, wherein:
FIGURE 1 is a perspective view of an electrical power unit constructed in accordance with the present invention;
FIGURE 2 is a perspective view of a power load distribution center constructed in accordance with the present invention, wherein the power load distribution center is mounted to a power source shown in phantom;
FIGURES 3A-3C are components of the power load distribution center shown in FIGURE 2;
FIGURE 4 is a partial perspective view shown in cross-section of the electrical power unit of FIGURE 1;
FIGURE 5 is a top partial view of one embodiment of the switching device;
FIGURE 6 is a top schematic view of an electrical power unit employed in a vehicle, such as a heavy truck; and
FIGURE 7 is another embodiment of an electrical power unit employed in a vehicle, such as a heavy truck.

### DETAILED DESCRIPTION OF THE PREFERRED EMBODIMENT

The present invention will now be described with reference to the accompanying drawings where like numerals correspond to like elements. The present invention is directed to an electrical power unit suitable for use as a main power source and power distribution center of a vehicle or suitable for use as an auxiliary power source and power distribution center and used in conjunction with a main power source. The electrical power units of the present invention are adapted to supply electrical power to a plurality of electrical devices, such as driving lights, power windows, communication equipment, and/or other powered vehicle accessories. Additionally, the present invention is directed to a unique power load distribution center mounted to a power source for forming the electrical power unit. While one embodiment of the electrical power unit will be described with reference to its installation in heavy trucks, the electrical power unit may be suitable for use in other vehicles, such as cars and lightweight trucks, or vehicles having main living quarters, such as boats and recreational vehicles. Additionally, the electrical power units of the present invention may find uses as portable power units in such industries as construction, law enforcement and fire protection, which require power in remote locations or in locations normally supplied with power but temporarily shut off due to a malfunction or system power failure. Thus, the following description is meant to be illustrative and not limiting the broadest scope of the invention, as claimed.

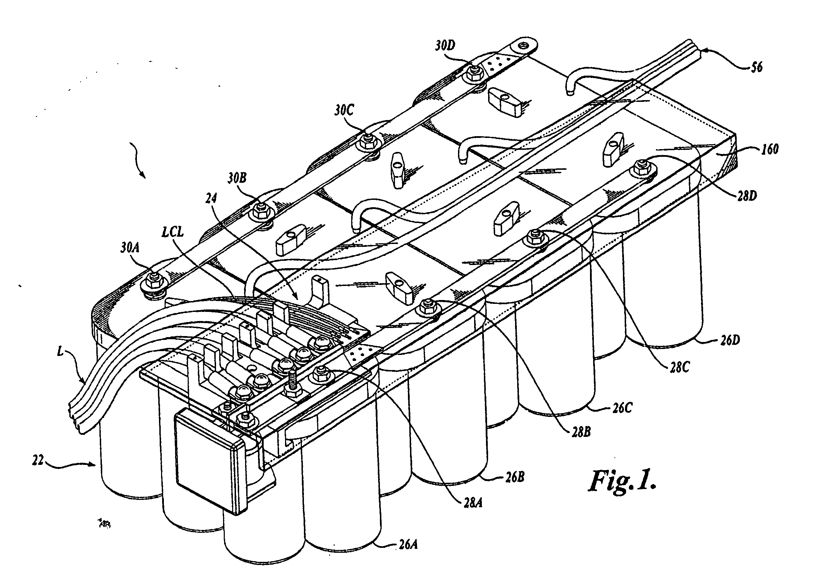

One illustrative embodiment of an electrical power unit, generally designated 20, formed in accordance with the present invention is shown in FIGURE 1. The power unit 20 comprises a power source 22 and a load distribution center 24 mounted to the power source 22. The power source 22 may be any self-contained source of electrical power; however, batteries or battery packs are preferably used. In the embodiment shown, the power source 22 includes a plurality of batteries 26A-26D having positive and negative terminals 28A-28D and 30A-30D, respectively. The batteries 26A-26D may be arranged in a side-by-side manner such that the positive and negative terminals are in substantial alignment. The batteries 26A-26D utilized as the power source 22 are preferably 12 volt, deep cycle, non-venting sealed batteries; however, other voltages, for example, 24 volts, may be used. While the power source is described above and illustrated herein as comprising four batteries, any number of batteries may be used, including a single battery.

The terms "non-venting" as used herein refers to any battery or power source that does not vent gas under normal charging conditions. One such non-venting battery that is suitable for use with the present invention is commercially sold under the name Optima, by Johnson Controls, Milwaukee, Wisconsin. Such non-venting batteries will vent at pressures of approximately 6-10 psi, which only occurs during abnormal conditions, e.g. overcharging conditions. Accordingly, such a battery is typically valve regulated, with the vented gas removed from the location of the load distribution center 24 by venting tubes 56, as shown best in FIGURE 1. As such, non-venting batteries are also sometimes referred to as valve regulated batteries.

It will be appreciated that venting batteries, i.e., batteries that release combustible gas during normal operating, e.g.; charging, conditions may be utilized by the present invention if the gas is contained or vented to a location remote from the power unit 20. Such battery configurations that either contain the vented gas in proximity of the power unit or vent the gas to a location remote from the power unit can be constructed by those having ordinary skill in the art, and thus, will not be described in detail herein. One such type of a venting battery that may be used if properly vented is the conventional flooded cell, lead acid battery.

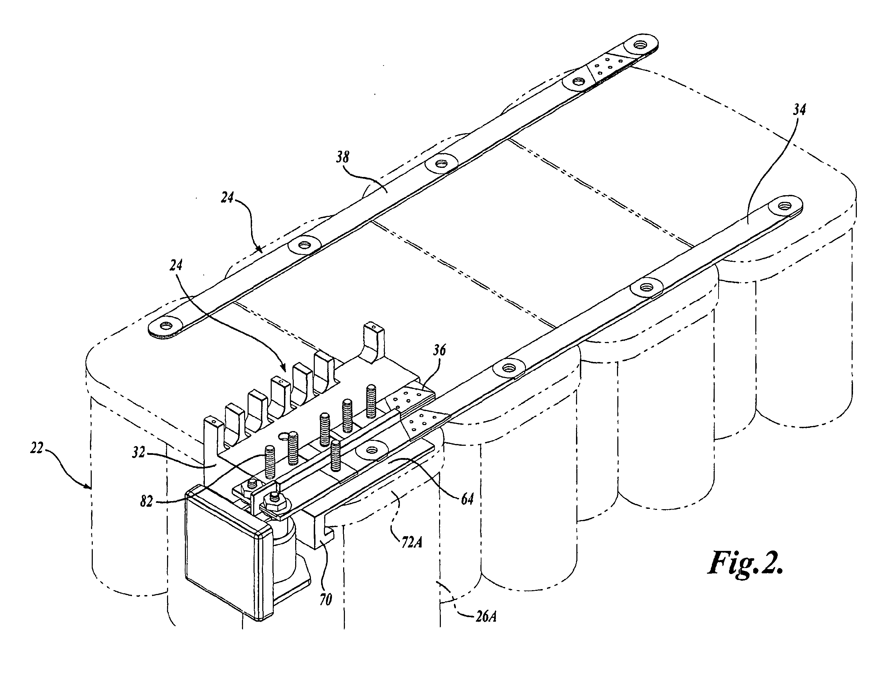

Turning now to FIGURE 2, there is shown a perspective view of the load distribution center 24 mounted to the power source 22 (shown in phantom). The load distribution center 24 includes a base 32, a primary positive terminal bus member 34 (hereinafter "primary bus member"), a secondary positive terminal bus member 36 (hereinafter "secondary bus member"), and a negative terminal bus member 38 (hereinafter "negative bus member"), each of which will now be described in turn.

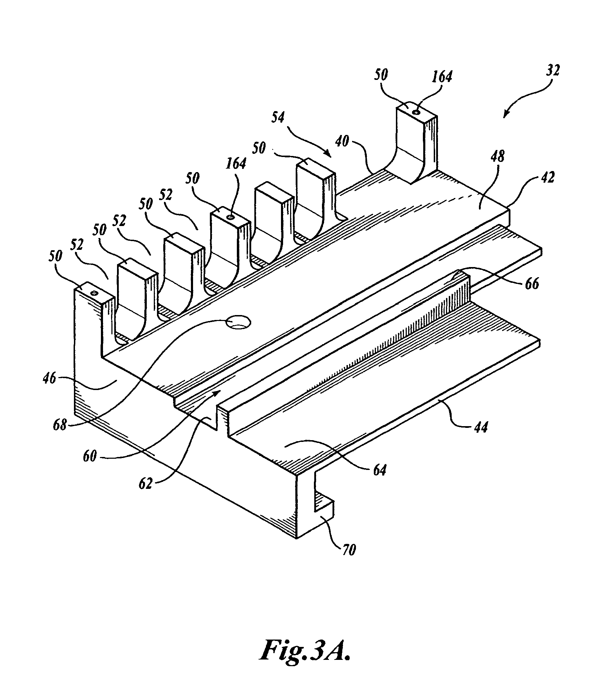

Referring now to FIGURE 3A, the base 32 is a plate-like structure of a some-what rectangular configuration constructed of a non-conductive material, such as plastic. The base 32 defines sides 40, 42, 44,and 46, a top surface 48, and may define a planar bottom surface (not shown) for resting substantially flat on the power source 22 (see FIGURE 3A). The base 32 includes a plurality of spaced-apart projections 50 integrally formed with or otherwise affixed to the top surface 48 of the base 32. The projections 50 extend orthogonally from the top surface 48 and are arranged along one side (shown as side 40 in FIGURE 3A) of the base 32. Adjacent projections 50 form gaps 52 through which the leads L of the electrical devices may be routed (see FIGURE 1). In the embodiment shown, a larger gap 54 is formed between the two end projections 50 positioned proximal the side 42, for accepting a plurality of low current leads LCL (see FIGURE 1). The projections 50, which form gaps 52, separate each lead L from one another and function as a strain relief at the connection interface between the electrical leads L and the secondary bus member, as will be described in more detail below.

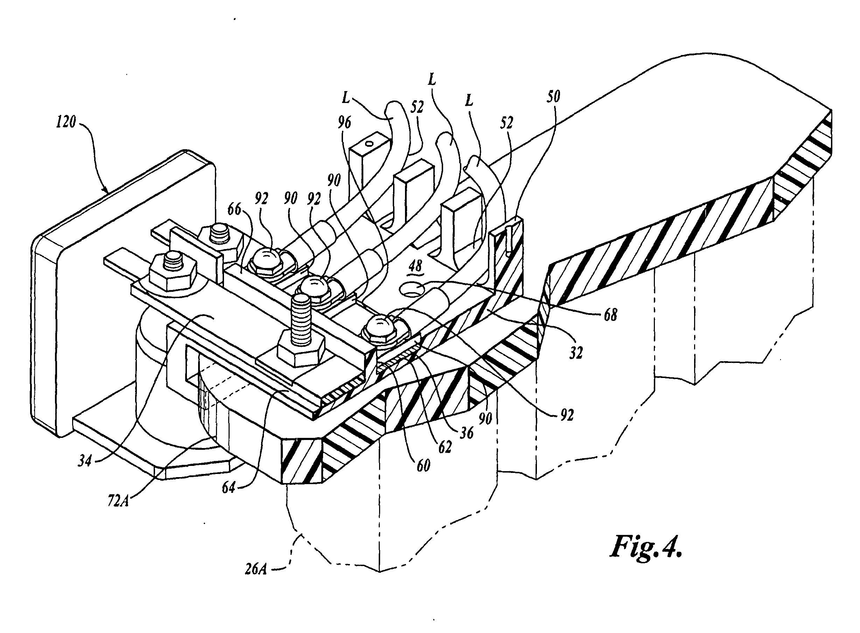

In the embodiment shown, a channel 60 may be formed in the top surface 48 of the base 32 a spaced distance from the projections 50. The channel 60 defines a planar support surface 62 and is configured for retaining and supporting the secondary bus member 36 (see FIGURE 3A) substantially parallel with the aligned projections 50. The channel 60 may be configured such that the top surface of the secondary bus member is flush with or is slightly recessed (e.g. 2-5 mm) below the top surface 48 of the base 32 when supported thereon, as shown best in FIGURE 4, the benefit of which will be described in detail below. Returning to FIGURE 3A, the base 32 further defines a second support surface 64 adjoining the side 44 of the base 32 for supporting the primary bus member 34 (see FIGURE 2). Positioned between the support surfaces 62 and 64, there is formed an elongated wall or rib 66 that extends parallel with the channel 60, the benefit of which will be described in detail below.

The base 32 is preferably secured to the power source 22 (see FIGURE 2) to inhibit movement of the base 32 with regard to the power source 22 during use. To this end, the base 32 may include an aperture 68 for securely mounting the base 32 to the power source 22 via a suitable fastener. It will be appreciated that the exact location of the aperture 80 may change due to the particular power source used. In the embodiment shown, the aperture 80 is located such that when the aperture 80 aligns with one battery mounting bore (hidden by base 32), the primary bus member 36 is substantially aligned with the positive battery terminals 28A-28D, as best shown in FIGURE 1. As best shown in FIGURES 3A and 4, the base 32 may optionally include a retaining flange 70 connected to or integrally formed with the base 32 for providing an alternative or additional method of removably connecting the base 32 to the power source. As best shown in FIGURE 2, the retaining flange 70 extends from the side 46 of the base 32, and is configured to clip onto the top lip 72A of the battery 26A, if so equipped. It will be appreciated that the base 32 may be removably secured to the power source 22 by other methods known in the art.

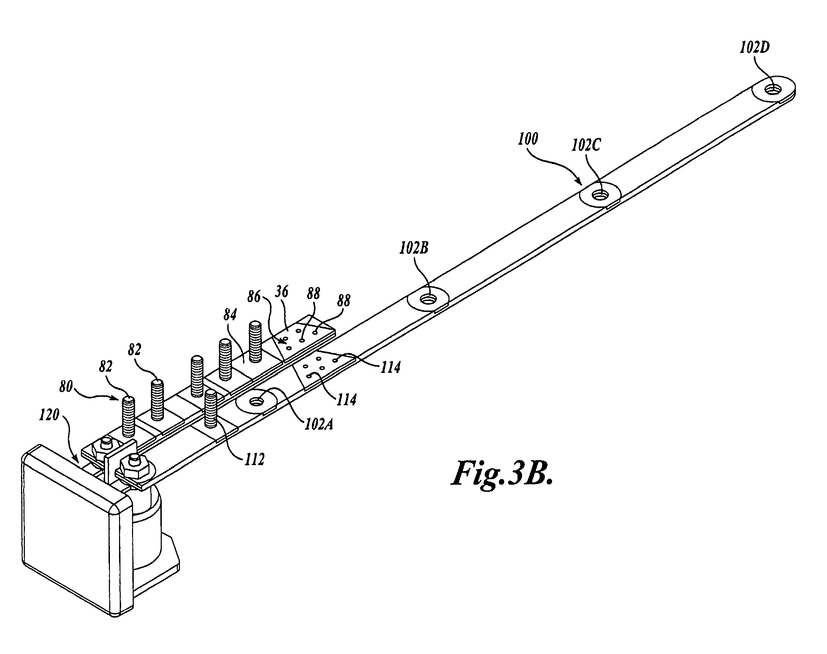

Referring now to FIGURE 3B, the secondary bus member 36 of the load center 24 is an elongated bar constructed of a conductive material, such as metal (e.g., copper, gold, etc.). The secondary bus member 36 includes at least one, and preferably, a plurality of connectors 80 in electrical communication with the secondary bus member 36 for connection with the electrical leads of the electrical devices. In the embodiment shown, the connectors 80 may be in the form of studs 82, which may be integrally formed with or otherwise connected to the secondary bus member 36. The studs 82 are made from a conductive material and may be externally threaded. The studs 82 project outwardly from the top surface 84 of the secondary bus member 36 and are spaced apart a distance similar to that of the gaps 52 (See FIGURE 3A). In the embodiment shown, the studs 82 are configured to receive stud fuses 90, such as model GF8 fuse links commercially available from Pudenz, of Dünsen, Germany, and distributed throughout North America by Bussman, as shown best in FIGURE 4. Returning to FIGURE 3B, in addition to or in place of the studs 82 are connectors 86 in the form of apertures 88, which may be internally threaded, for connecting electrical leads LCL (see FIGURE 1) of low current devices to the secondary bus member 36 by externally threaded fasteners (not shown). The low current leads LCL may include in-line fuses not shown but know in the art, such as blade fuses or standard fuses, to protect the electrical devices from the power source in over-load conditions.

When the secondary bus member 36 is assembled on the based 32, as best shown in FIGURES 2 and 4, the secondary bus member 36 is received by channel 60 and supported by the support surface 62 in a position such that the proximal and distal ends of secondary bus member 36 extend past the support surface 62 on sides 42 and 46, and the studs 82 project outwardly from the top surface 48 and are aligned with one gap 52 formed by the alignment projections 50. As such, when supported by the base 32, the secondary bus member 36 is oriented substantially parallel to the alignment of projections 50 of the base 32. When supported by the support surface 62, the top surface 84 of the secondary bus member 36 may be slightly recessed within the channel 60. By recessing the top surface 84, an elongated abutment 96 is created by the side wall of the channel 60, which is substantially parallel with the rib 66. The abutment 96 and the rib 66 may be spaced apart such that when stud fuses 90 are mounted on the studs 82 and supported by the top surface 84 of the secondary bus member 36, the stud fuses 90 slidably seat therebetween but are rotationally inhibited. If desired, the secondary bus member 36 may be secured to the base via any suitable mechanical or chemical fasteners.

While the secondary bus member 36 has been shown recessed within the channel 60, other configurations may be employed. For example, in one embodiment, the bus member 36 may be flush with the top surface 48 of the base 32. In this particular embodiment, the rib 66 may be utilized to prevent rotation of the stud fuses 90. In another embodiment, the channel 60 may be omitted and the secondary bus member is supported by the top surface 48 adjacent the rib 66. In this particular embodiment, the rib 66 may again be utilized to prevent rotation of the stud fuses and/or the secondary bus member may be configured with raised portions to contact the sides of the stud fuses for accomplishing the same function.

Returning to FIGURE 3B, the load distribution center further includes a primary bus member 34. Similar to the secondary bus member 36, the primary bus member 34 is an elongated bar constructed of a conductive material, such as metal (e.g., copper, gold, etc.). The primary bus member 34 includes at least one connector 100 for electrically connecting the primary bus member 34 to the power source's positive terminal(s). In the embodiment shown, the primary bus member 34 is formed with spaced apertures 102A-102D for receiving the positive terminals 28A-28D of the power source 22 (see FIGURE 1). It will be appreciated that other fastening methods may be practiced with the present invention, such as clips, clamps or snap fit arrangements, to name a few. The primary bus member 34 may further include other connectors, such as an externally threaded stud 112, and/or may include internally threaded apertures 114 for connecting the leads of low current electrical devices to the primary bus member 34, if desired.

When assembled, as best shown in FIGURES 2 and 4, the primary bus member 34 is positioned on the base 32 such that the primary bus member 34 is supported by the second support surface 64 of the base 32 a spaced distance from the secondary bus member 36, and preferably abutting the rib 66. As such, the rib 66 functions to inhibit incidental contact between the primary and secondary bus members 34 and 36 during use, and as an alignment device for aligning the primary bus member 34 substantially parallel with the secondary bus member 36. If desired, the primary bus member 34 may be secured to the base via any suitable mechanical or chemical fasteners. In the embodiment shown, the primary bus member 34 is electrically connected at its proximal end to the proximal end of the secondary bus member 36 through a switching device 120 capable of decoupling the electrical connection between the primary and secondary bus members under certain operating conditions.

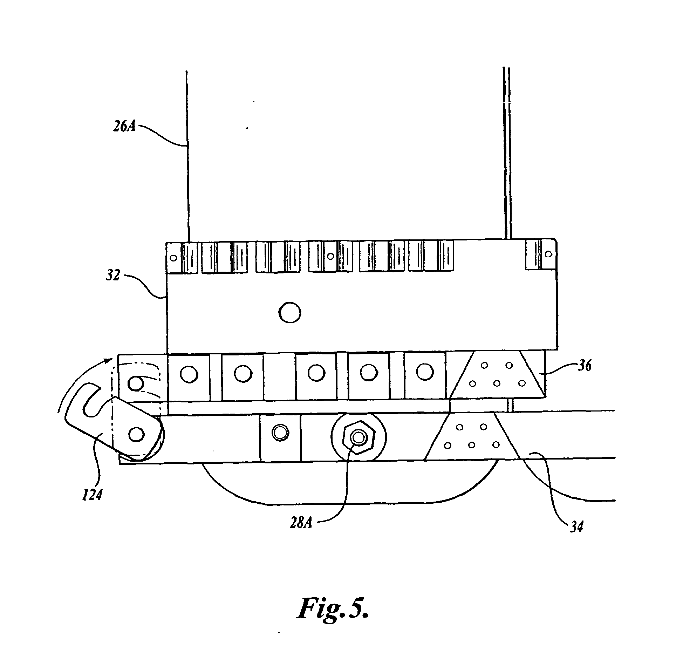

The switching device 120 may be a manually operated mechanical disconnect, such as a pivoting bar 124, shown in FIGURE 5, which pivots between a closed position (shown in phantom), wherein the second bus member 36 and the primary bus member 34 are in electrical communication and the supply of power may flow therebetween, and an open position, wherein the secondary and primary bus members 34 and 36 are not in electrical communication, and thus, are electrically isolated from one another. Alternatively, the switching device 120 may be an electrical switch as shown in FIGURE 3B. The electrical switch may be any digital, analog, or computer controlled switch that may decouple the connection between the primary and secondary bus members 34 and 36 under certain operating conditions or operator input.

In the embodiment shown in FIGURES 1, 2, 3B, and 4, the switching device 84 is a low voltage disconnect (LVD) that includes a semiconductor switching circuit (not shown) that senses power source voltage. Under normal operating conditions when the power source 22 (see FIGURE 1) has an adequate charge, the switching circuit is in a closed state in which the low voltage disconnect interconnects the primary and secondary bus members 34 and 36 in electrical communication, which in turn, allows the supply of power to flow to the electrical devices. Once the voltage of the power source drops below a pre-selected threshold or shut off point, the low voltage disconnect automatically disconnects the flow of power to the electrical devices by changing the state of the switching circuit to an open state, wherein the primary bus member and the secondary bus member are isolated from one another. The switching circuit may include a relay for switching the low voltage disconnect between the closed state and the open state.

In operation, in instances where the electrical devices are powered over a long period of time during no-idle conditions (i.e.; a condition where the main engine is shut off and the power source is supporting the operation of the driver accessory devices, e.g.; television, coffee maker, stereo, etc.), the low voltage disconnect automatically decouples the connection between the primary and secondary bus members 34 and 36 when the voltage of the power source drops below the threshold value. This preserves enough power within the power source 22 for operating critical vehicle functions, such as starting the vehicle. The state of the low voltage disconnect may be changed by operator input, for example, via a switch located within the vehicle. One suitable electrical switching device that may be practiced with the present invention is a low voltage disconnect sold as Model No. 13700 by Sure Power, of Tualatin, Oregon.

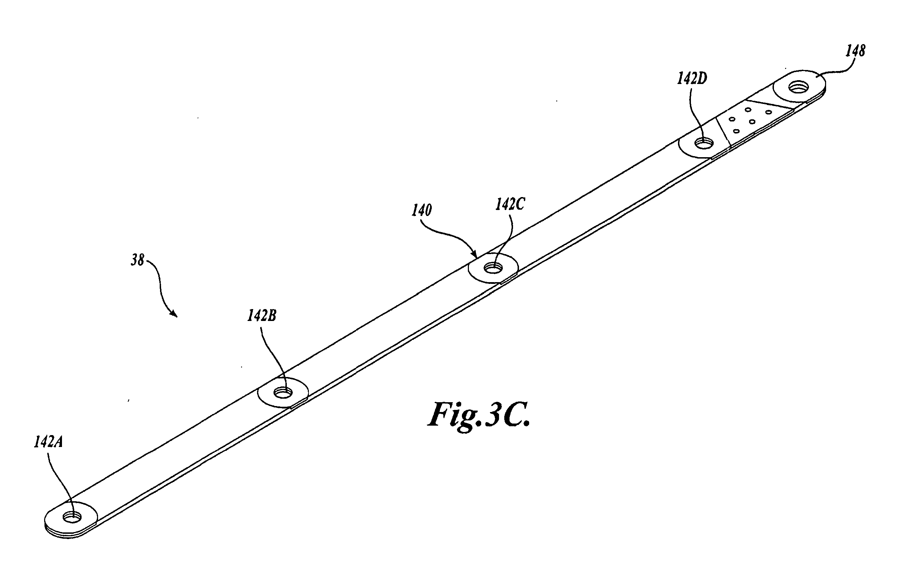

Returning now to FIGURE 2, the load distribution center 22 further includes a negative bus member 38. As best shown in FIGURE 3C, the negative bus member 38 is an elongated bar constructed of a conductive material, such as metal (e.g., copper, gold, etc.). The negative bus member 38 includes at least one connector 140 for electrically connecting the negative bus member 38 to the power source's negative terminal(s). In the embodiment shown, the negative bus member 38 is formed with spaced apertures 142A-142D sized and configured for receiving the negative terminals 30A-30D of the power source 22 (see FIGURE 1). It will be appreciated that other fastening methods for connecting the negative bus member 38 to the negative terminals of the power source 22 may be practiced with the present invention, such as clips, clamps or snap fit arrangements, to name a few. The negative bus member 38 further includes a ground connector 148 for connecting the negative bus member 38 to ground, such as the frame of the vehicle.

Returning now to FIGURE 1, the power load distribution center 24 may optionally include a shield 160, preferably made of plastic, which covers the connections of the electrical device leads L and LCL to the secondary bus member 36 and/or the primary bus member 34. The shield 160 may be removably connected to the base 32 through threaded apertures 164 formed at the top of one or more projections 50 (see FIGURE 3A). In one embodiment, the shield 160 may be configured with a retainment flange (not shown) similar to that of retainment flange 70 (see FIGURE 2). In this embodiment, the shield retainment flange may be positioned opposite the projections 50 for clipping the shield 160 onto a portion of the primary bus member 34, the base 32, or the top lip 72A of the battery 26A.

The assembly of one suitable embodiment of the power unit 20 will now be described in detail with reference to FIGURES 1 and 2. First, a plurality of batteries 26A-26D are arranged side by side so that their positive and negative terminals 28A-28D and 30A-30D, respectively, are aligned. The plurality of arranged batteries 26A-26D may be placed within an optionally tray (not shown) for supporting the batteries 26A-26D in the side-by-side configuration. Next, the base 32 is mounted to one of the batteries 26A-26D at the end of the arrangement and secured thereto by a fastener routed through the base aperture 68 and/or use of the retainment flange 84. When mounted on the battery 26A, the base 32 is positioned on the battery 26A such that the apertures 102A-102D of the primary bus member 34 are aligned with and receive the positive terminals 28A-28D. The positive terminals 28A-28D of the batteries 26A-26D are then connected to the primary bus member 34 with suitable fasteners, if desired, followed by connecting the negative bus member 36 to the negative terminals 30A-30D of the batteries 26A-26D in a similar manner.

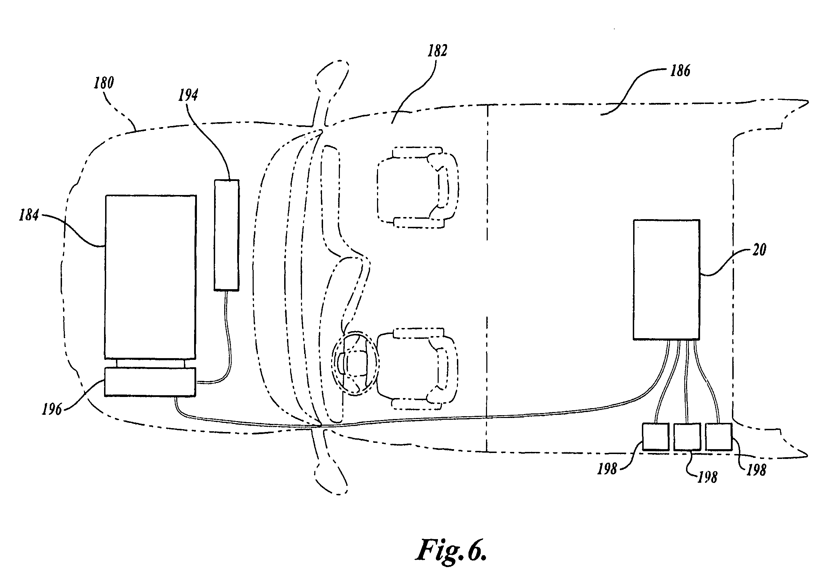

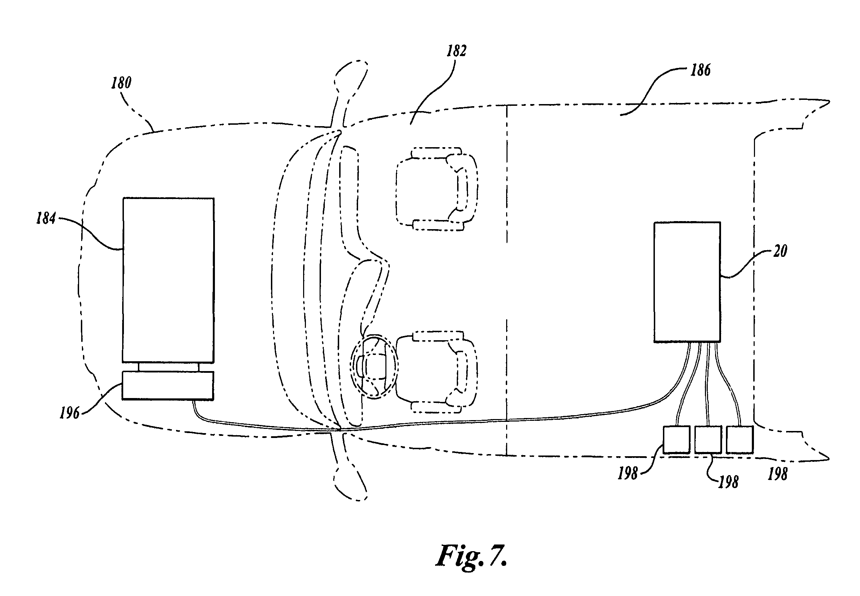

After the power unit 20 is assembled, the power unit 20 may be installed into a vehicle. One non-limiting example of a power unit 20 installed into a vehicle, such as a class 8 or heavy truck, will now be described in detail with reference to FIGURES 6 and 7. The vehicle 180 into which the power unit 20 may be installed includes a main cabin 182, an engine 184, and a sleeper compartment 186 located behind the main cabin 182 where the operator may sleep. Depending on the application, the power unit 20 may be installed as the main power and distribution source, as shown best in FIGURE 7, to serve such functions as starting the engine 184, powering the running lights, and powering electrical devices within the main cabin or sleeper compartment of the heavy truck, such as the radio, electrical receptacles, and/or the instrument panel, if desired, when the engine of the heavy truck is not running (i.e., no-idle condition), and thus, when the alternator is not producing electrical power. Alternatively, as shown in FIGURE 6, the power unit 20 may be an auxiliary power unit, used in conjunction with a main power source 194, to supply electrical power to the sleeper compartment 186 and/or main cabin 182 of the heavy truck while the engine is not running (i.e. no-idle condition), and to provide enough reserve power to start the engine 184 of the heavy truck 180 in such circumstances as when the main power source 194 has been drained past the voltage required to start the engine. It will be appreciated that other embodiments of the present invention may utilize the power unit 20 as the auxiliary power source and utilize the main power source 194 only to start the engine 184. In these embodiment, and auxiliary power unit may be utilized to supply the remaining power required by the vehicle in no-idle conditions.

In the embodiment shown in FIGURE 6, the power unit 20 is installed as an auxiliary power unit, which in turn, is electrically connected to the main power source 194 and/or to an engine starter 196 by methods and configurations known in the art. In the embodiment shown in FIGURE 7, the power unit 20 is installed as the main power source which is directly connected to the engine starter 196. In either case, the power unit 20 may be installed by placing the power unit 20 at a location within the vehicle, preferably one in which the power unit remains stationary during the operation of the vehicle. In the embodiments shown in FIGURES 6 and 7, the power unit 20 is installed within the sleeper compartment 186, preferably under the sleeper bed (not shown). By placing the power unit 20 within the vehicle, the ambient temperature of the power source 22 (see FIGURE 1) may remain at a higher temperature as compare to if the power unit 20 was installed outboard of the vehicle 180 in such locations as the external storage compartments. Storing and operating the power source at higher ambient temperatures typically results in a longer lasting power source discharge, which correlates into a longer period of time the power unit 20 can power the desired electrical devices 198, such as those in the sleeper compartment 186, in a no-idle condition. In one embodiment, the power source is preferably stored at a nominal temperature of approximately 77 degrees F.

Once the power unit 20 is in place, the proper connections to the secondary bus member 36 can be established. As shown in FIGURES 1, 2 and 4, any electrical device, outlet, etc. requiring power when the vehicle is not running may be connected to the secondary bus member 36 through appropriate electrical leads L or LCL. First, the optional plastic shield 160 is removed, if used. Next, the leads L of the electrical devices 198 (see FIGURES 6-7) are routed though separate gaps 52 formed in-between the projections 50 of the base 32 and connected to the studs 82. As such, the electrical devices 198 are in electrical communication with the secondary bus member 36. It will be appreciated that the leads L may be formed with either spade or loop connectors, or any other suitable connector, for ease of connection to the studs 82.

To provide over-load protection, stud fuses 90, or other fuses, such as in-line fuses, may be used. In one embodiment, current ranges for the stud fuses is approximately 50-300 amps, while the current range for the in-line fuses is approximately 0.1-40 amps. If stud fuses 90 are used, as shown in FIGURE 4, they are passed over the studs 82 and fastened to the studs 82 by insulating end caps 92 that threadably engage the studs 82. The stud fuses 90 are supported by the secondary bus member 36 and are preferably aligned such that it's fuse viewing window (not shown), which provides a visual indication that the fuse is still intact, is visible. In the embodiment shown, the stud fuses 90 engage against the rib 66 and the abutment 96 formed by the channel 60, and therefore, are inhibited from rotating. This ensures that the viewing window of the stud fuses 90, if so positioned, is always accessible to the operator. Prior to tightening the insulated end caps 92 into engagement with the stud fuses 90, the leads L are inserted in-between the stud fuses 90 and the end caps 92. As is known in the art, the end caps 92, such as an electrically insulated lock nut, and the stud fuses 90 are specifically designed such that the electrical connection between the leads L and the studs 82 are routed only through the fuses 90 when assembled.

Electrical devices that require power at all times, regardless of the condition of the power source, may be connected to the primary bus member through stud connection 112 or low current connections 114. Additionally, electrical devices that require AC power may be connected to either the primary or secondary bus members 34 and 36 via an inverter known in the art. Finally, the negative bus member 38 is grounded such as by being connected to the frame of the vehicle 180.

While the power source 22 is described above and shown herein as being a plurality of batteries arranged in an aligned, side-by-side configuration, it will be appreciated that a single battery or power source may be used or that the plurality of batteries may have other configurations, such as staggered (i.e., not aligned) or aligned head-to-toe so that the positive terminal of one battery is adjacent to the negative terminal of an adjacent battery, to name a few. In these latter embodiments, it will be appreciated that the primary bus member and the negative bus member would be reconfigured accordingly.

It will be appreciated that the embodiments of the present invention realize numerous benefits and advantages over the prior art, some of which will now be described. Embodiments of the present invention reduce the number of connections, in many cases by approximately 60 to 70%, and therefore, reduce costs. The reduction in number and methods of electrical connecting the electrical devices directly to the power source also improve electrical efficiency by reducing the cumulative amount of current loss associated at each connection. Electrical efficiency is further realized since the connections are not stacked but individually connected to the bus member by screw fasteners or studs, bolts and nuts, to name a few. Further, the method of connection of the electrical devices directly to the power source reduces ground loops.

Embodiments of the present invention also reduce the number of hardware parts and associated cost of mounting, for example, the LVD, relay, fuse hardware by approximately 40%. Embodiments of the load distribution center provide modular installation on power sources, such as batteries, during truck assembly, which results in a reduction of power source connection time by approximately 50% on truck assembly lines. Additionally, embodiments of the present invention aid in the conservation of space in the battery box and on the truck chassis and cab. Further, embodiments of the present invention provide a versatile and ready point of connection for the addition of electrical devices. For example, spare studs may be provided for electrical accessories for currents higher than 50 amps and spare holes may be drilled and tapped in the bus member for accessories that operate at currents below 50 amps.

While the preferred embodiments of the invention have been illustrated and described, it will be appreciated that various changes can be made therein without departing from the spirit and scope of the invention. For example, the switching device 84 may be omitted in several embodiments of the present invention. Accordingly, in such embodiments, the secondary bus member may also be omitted, and the electrical leads of the electrical devices may be connected directly to the primary bus member. Additionally, the load distribution center 24 may be first assembled with connections/fuses, etc. prior to securement to the power source 22.

## Claims

1. An electrical power unit for supplying power to at least one electrical device having an electrical lead, the power unit comprising:
an electrical power source having at least one negative and positive terminal;
a first conductive member removably secured to or supported by the power source, the first conductive member being connected in electrical communication to the positive terminal of the power source and includes at least one connector for electrically connecting the electrical lead of the electrical device to the first conductive member; and
a second conductive member connected in electrical communication to the negative terminal of the power source.

2. The electrical power unit of Claim 1, further comprising a third conductive member, and a switching device selectively interconnecting the first and third conductive members in electrical communication.

3. The electrical power unit of Claim 1, wherein the third conductive member includes mean for connecting an electrical device to the third conductive member.

4. The electrical power unit of Claim 3, further comprising a base, the base defining a fuse rotation inhibiting structure disposed proximal the connector or the third conductive member connector means.

5. The electrical power unit of Claim 1, further comprising a base disposed in supporting relationship with the first conductive member, and means for removably securing the base to the power source.

6. The electrical power unit of Claim 1, further comprising a strain relief.

7. The electrical power unit of Claim 1, wherein the power source is a non-venting battery.

8. An electrical power unit comprising:
an electrical power source having at least one negative and positive terminal;
a load distribution device removably mounted to the power source, the load distribution device including a primary bus connected in electrical communication to the positive terminal of the power source, a secondary bus positioned a spaced distance from the primary bus member, and a negative bus connected in an electrical communication to the negative terminal of the power source; and
a switching device selectively interconnecting the primary and secondary buses in electrical communication, the switching device having an closed state, wherein the switching device couples the primary bus and the secondary bus in electrical communication, and a open state, wherein the switching device decouples the electrical connection of the primary bus from the secondary bus.

9. The electrical power unit of Claim 8, wherein the secondary bus member includes at least one connector.

10. The electrical power unit of Claim 8, wherein the primary bus includes at least one connector.

11. The electrical power unit of Claim 8, wherein the switching device includes a relay that changes the state of the switching device under certain power source conditions or operator input.

12. The electrical power unit of Claim 11, wherein the switching device changes states when the present voltage of the power source is less than a preselected threshold.

13. The electrical power unit of Claim 8, wherein the switching device is a mechanical switch movable between the open state and the closed state.

14. The electrical power unit of Claim 13, wherein the mechanical switch includes a conductive member pivotally connected to one of the primary or secondary buses.

15. The electrical power unit of Claim 8, wherein the load distribution device includes means for removably securing the load distribution device to the power source.

16. The electrical power unit of Claim 8, wherein the load distribution device further includes spaced-apart upward projections.

17. The electrical power unit of Claim 8, wherein the power source is comprised of at least one battery.

18. The electrical power unit of Claim 17, wherein the battery is a non-venting battery.

19. The electrical power unit of Claim 8, wherein the power source is a plurality of batteries having positive and negative terminals, wherein said plurality of batteries arranged in a side-by-side manner such that the negative and positive terminals of the plurality of batteries are in substantial alignment.

20. In a vehicle having a propulsion generation unit and a plurality of electrical vehicle accessories, a power unit comprising:
at least one power source having negative and positive terminals;
a power load distribution device for interconnecting the positive terminal of the power source and plurality of electrical vehicle accessories, wherein the power load distribution device includes a primary bus member connected in electrical communication to the positive terminal of the power source, a negative bus member connected in electrical communication to the negative terminal of the power source, and a secondary bus member; and
a switching device selectively interconnecting the secondary bus member and the primary bus member in electrical communication, the switching device having an open state, wherein the primary and secondary bus members are isolated from one another, and a closed state, wherein the supply of power from the power source may flow between the primary and secondary bus members.

21. The power unit of Claim 20, wherein the switching device monitors the present voltage or current of the power source, and changes states when the present voltage of the power source is less than a preselected threshold.

22. The power unit of Claim 20, wherein the vehicle further includes a sleeper compartment, the power source being located within the sleeper compartment of the vehicle in use.
